# EUROPEAN PATENT APPLICATION

(11) **EP 4 429 013 A1**
(43) Date of publication of application: **11.09.2024**
(21) Application number: 23853010.9
(22) Date of filing: 10.08.2023
(51) Int. Cl.: H01M 50/533, H01M 50/54, H01M 50/55, H01M 50/609, H01M 50/209

(54) **STACK-TYPE ELECTRODE ASSEMBLY WITH IMPROVED CELL CAPACITY**

(30) Priority: 11.08.2022 KR 20220100270
(71) Applicant: LG Energy Solution, Ltd., Seoul 07335 (KR)
(72) Inventor: BOK, Cheon Hee, Daejeon 34122 (KR); SUNG, Joo Hwan, Daejeon 34122 (KR)
(74) Representative: Goddar, Heinz J.
(86) International application number: PCT/KR2023/011809
(87) International publication number: WO 2024/035141

(57) **Abstract**

Provided are electrode assemblies, which may be used in secondary batteries. The electrode assemblies may include a stack-type electrode assembly; a plurality of positive electrode tabs located at a first end of the stack-type electrode assembly in a width direction; and a plurality of negative electrode tabs located at a second end of the stack-type electrode assembly in the width direction; and a positive electrode current collector and a negative electrode current collector electrically connected to the plurality of positive electrode tabs and to the plurality of negative electrode tabs, respectively, wherein: an end of each of the plurality of positive electrode tabs and an end of each of the plurality of negative electrode tabs are individually bonded to the positive electrode current collector and to the negative electrode current collector, respectively.

## Description

### CROSS-REFERENCE TO RELATED APPLICATIONS

This application is a National Phase of International Application No. PCT/KR2023/011809 filed on August 10, 2023, which claims priority to and the benefit of Korean Patent Application No. KR 10-2022-0100270, filed on August 11, 2022. The contents of the above-identified applications are herein incorporated by reference in their entireties.

### TECHNICAL FIELD

The present invention relates to a stack-type electrode assembly, and to a technique for improving the practical capacity of a stack-type electrode assembly by shortening the length of a foil tab of a stack-type electrode assembly, thereby reducing the area occupied by a non-coated part.

### BACKGROUND

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a charge and dischargeable power generator consisting of a laminated structure of electrodes and separators.

Electrode assemblies can be roughly categorized into Jellyroll type, which is wound by interposing a separator between a positive electrode and negative electrode of an active material-coated sheet, Stack-type in which a plurality of positive electrodes and negative electrodes is sequentially stacked with a separator interposed therebetween, and Stack & Folding type in which stack-type unit cells are wound with a long separator film.

Among the various types of electrode assemblies, the stack-type electrode assembly consists of a number of unit cells stacked in a stack structure, with separators placed between the positive electrodes and negative electrodes, and each unit cell is provided with its own foil tab, including a positive electrode tab and a negative electrode tab. The foil tabs are formed by performing a punching process on a non-coated part of the positive electrode and negative electrode, where an active material is not applied. These foil tabs serve as the entrance and exit for electrical connections to the electrode assembly, and a plurality of foil tabs are welded to a current collector and tied together as one.

However, as the capacity of secondary batteries increases to medium and large sizes, the number of unit cells stacked in the stack-type electrode assembly also increases. As the number of stacked unit cells increases, the number of foil tabs increases accordingly. The more foil tabs there are, the more difficult it becomes to weld them to the current collector, and the foil tabs are made longer to facilitate easier welding.

The lengthening of the foil tabs means an increase in the width of the non-coated part in both the positive electrode and negative electrode. As the non-coated part without the active material increase, the actual capacity based on an electrode assembly of the same size decreases.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

The present disclosure provides a solution for effective welding of a plurality of foil tabs to a current collector without increasing the length of the foil tabs, in line with the trend towards medium and large capacities of secondary batteries.

However, the technical problems to be solved by the present disclosure are not limited to the above-described problem, and other problems not mentioned can be clearly understood by those skilled in the art from the following description.

The present disclosure provides an electrode assembly which may include a stack-type electrode assembly; a plurality of positive electrode tabs located at a first end of the stack-type electrode assembly in a width direction; and a plurality of negative electrode tabs located at a second end of the stack-type electrode assembly in the width direction; and a positive electrode current collector and a negative electrode current collector electrically connected to the plurality of positive electrode tabs and to the plurality of negative electrode tabs, respectively, wherein: an end of each of the plurality of positive electrode tabs and an end of each of the plurality of negative electrode tabs are individually bonded to the positive electrode current collector and to the negative electrode current collector, respectively.

An end of each of the positive electrode tabs and an end of each of the negative electrode tabs may include a bending portion, and the bending portion of each of the positive electrode tabs and the bending portion of each of the negative electrode tabs may be individually bonded to the positive electrode current collector and the negative electrode current collector, respectively.

Here, each bending portion of the positive electrode tabs and each bending portion of the negative electrode tabs may be directly bonded to a facing surface of the positive electrode current collector and a facing surface of the negative electrode current collector, respectively.

In an exemplary embodiment of the present disclosure, the positive electrode tabs may be arranged in a row at a substantially equal height with respect to the stack-type electrode assembly; and the negative electrode tabs may be arranged in a row at a substantially equal height with respect to the stack-type electrode assembly.

In an exemplary embodiment of the present invention, the positive electrode tabs may form a plurality of positive tab groups, each positive tab group may be arranged in a row at a different height with respect to the stack-type electrode assembly; and the negative electrode tabs may form a plurality of negative tab groups, each negative tab group may be arranged in a row at a different height with respect to the stack-type electrode assembly.

For example, the stack-type electrode assembly may include a plurality of unit cells arranged in a thickness direction; each positive tab group of the plurality of positive tab groups may comprise the positive electrode tabs of a plurality of adjacent unit cells of the stack-type electrode assembly; and each negative tab group of the plurality of negative tab groups may comprise the negative electrode tabs of a plurality of adjacent unit cells of the stack-type electrode assembly.

In addition, the positive electrode current collector may include a plurality of positive branch current collectors, each positive branch current collector may correspond to one of the positive tab groups in the plurality of positive tab groups; and the negative electrode current collector may include a plurality of negative branch current collectors, each negative branch current collector may correspond to one of the negative tab groups in the plurality of negative tab groups.

In certain embodiments, the plurality of positive branch current collectors may be arranged in parallel with respect to the thickness direction of the stack-type electrode assembly, each of the positive branch current collectors may have extend in a different height according to a height of one of the positive tab groups in the plurality of positive tab groups; and the plurality of negative branch current collectors may be arranged in parallel with respect to the thickness direction of the stack-type electrode assembly, each of the negative branch current collectors may extend in a different height according to a height of one of the negative tab groups in the plurality of negative tab groups.

In certain cases, each positive tab group of the plurality of positive tab groups may comprise at least one non-contiguous pair of positive electrode tabs; and each negative tab group of the plurality of negative tab groups may comprise at least one non-contiguous pair of negative electrode tabs.

In certain cases, the positive electrode tabs of adjacent unit cells of the stack-type electrode assembly may be arranged in a row at a different height with respect to the stack-type electrode assembly; and the negative electrode tabs of adjacent unit cells of the stack-type electrode assembly may be arranged in a row at a different height with respect to the stack-type electrode assembly.

In addition, each of the plurality of positive branch current collectors may include a first portion extending in the thickness direction of the stack-type electrode assembly, wherein the first portions of each of the plurality of positive branch current collectors may be arranged in parallel with respect to a height direction of the stack-type electrode assembly; each of the plurality of positive branch current collectors may include a second portion extending in the height direction of the stack-type electrode assembly according to a height of one of the positive tab groups in the plurality of plurality of positive tab groups; each of the plurality of negative branch current collectors may include a first portion extending in the thickness direction of the stack-type electrode assembly, wherein the first portions of each of the plurality of negative branch current collectors may be arranged in parallel with respect to the height direction of the stack-type electrode assembly; and each of the plurality of negative branch current collectors may include a second portion extending in the height direction of the stack-type electrode assembly according to a height of one of the negative tab groups in the plurality of plurality of negative tab groups.

Meanwhile, the present disclosure may provide a prismatic secondary battery including: a case; an electrode assembly, such as those disclosed herein, stored inside the case; a cap plate coupled to the case, the cap plate including a positive terminal and a negative terminal, wherein the positive terminal and the negative terminal are electrically connected to the positive electrode current collector and the negative electrode current collector of the electrode assembly, respectively; and an electrolyte inside the case.

A stack-type electrode assembly of the present disclosure with the aforementioned configuration not only resolves the issue of the lengthening of foil tabs that occurs when a plurality of foil tabs are tack-welded and then welded to the current collector, as in conventional methods, by individually bonding each positive and negative electrode tab to the positive electrode current collector and negative electrode current collector, but it also improves the electrical conductivity of the stack-type electrode assembly.

In addition, in the stack-type electrode assembly according to the present disclosure, the positive tabs and negative tabs each have a bending portion at their ends, and these bending portions are individually bonded to the positive electrode current collector and negative electrode current collector. Through the bending portion, sufficient welding area at the ends of the foil tabs may be secured, thereby preventing issues such as the foil tabs from shorting in the current collector due to insufficient welding strength.

However, the technical effects that can be obtained through this disclosure are not limited to those described above. Other effects not mentioned here will be clearly understood by those skilled in the art from the description detailed below.

### BRIEF DESCRIPTION OF THE DRAWINGS

The following drawings accompanying this specification illustrate preferred exemplary embodiments of the present disclosure and are intended to serve as a further understanding of the technical ideas of the present disclosure in conjunction with the detailed description of the disclosure that follows, so the present disclosure is not to be construed as limited to what is shown in such drawings.
FIG. 1 is a drawing illustrating a stack-type electrode assembly configuring the electrode assembly of the present disclosure.
FIG. 2 is a drawing illustrating the structure in which a current collector is coupled to the stack-type electrode assembly of FIG. 1.
FIG. 3 is a drawing illustrating a cross-sectional view in which the stack-type electrode assembly of FIG. 1 is bonded to a current collector.
FIG. 4 is a drawing illustrating a stack-type electrode assembly and a current collector according to another exemplary embodiment of the present disclosure.
FIG. 5 is a drawing illustrating a stack-type electrode assembly and a current collector according to another exemplary embodiment of the present disclosure.
FIG. 6 is a drawing illustrating an example of a prismatic secondary battery including the electrode assembly according to the present disclosure.

### DETAILED DESCRIPTION

The present disclosure may have various modifications and various examples, and specific examples are illustrated in the drawings and described in detail in the description.

However, it should be understood that the present disclosure is not limited to specific embodiments, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure provides an electrode assembly that includes a stack-type electrode assembly, and a positive electrode current collector and a negative electrode current collector.

The stack-type electrode assembly is a plurality of unit cells stacked in a stack structure with a separator interposed between the positive electrode and negative electrode, with a plurality of positive electrode tabs and a plurality of negative electrode tabs formed at each end in the width direction. That is, the positive electrode tabs and negative electrode tabs are separated from each other on the sides of the stack-type electrode assembly.

The positive electrode current collector and the negative electrode current collector are each a component of conductive material to which a plurality of positive electrode tabs and a plurality of negative electrode tabs are electrically connected. By having both a plurality of positive electrode tabs and a plurality of negative electrode tabs connected to the positive electrode current collector and the negative electrode current collector, respectively, the stack-type electrode assembly can be stored in the case of a prismatic secondary battery and wiring to the positive and negative electrode terminals is facilitated.

In the present disclosure, the ends of the positive electrode tabs and negative electrode tabs are individually bonded to the positive electrode current collector and negative electrode current collector, respectively. As each positive electrode tab and negative electrode tab are independently bonded to the positive electrode current collector and negative electrode current collector, it not only solves the problem of the foil tabs lengthening due to tack welding of a plurality of foil tabs followed by re-welding to the current collector, as in conventional methods, but also enables performance improvements such as electrical conductivity performance in the stack-type electrode assembly, for example, increased rated current or reduced resistance, and the like.

In addition, in the present disclosure, the positive electrode tabs and negative electrode tabs are each provided with a bending portions at their ends, and the bending portions of the positive electrode tabs and negative electrode tabs are individually bonded to the positive electrode current collectors and negative electrode current collectors, respectively. Through the bending portion, sufficient welding area at the ends of the foil tabs may be secured, thereby preventing issues such as the foil tabs from shorting in the current collector due to insufficient welding strength.

Hereinafter, a detailed description will be given of specific embodiments of the secondary battery of the present disclosure with reference to the attached drawings. For reference, the relative positions specified in the directions of front and back, up and down, and left and right used in the following description are intended to aid in understanding the disclosure, and unless specially defined, are based on the directions shown in the drawings.

### First embodiment

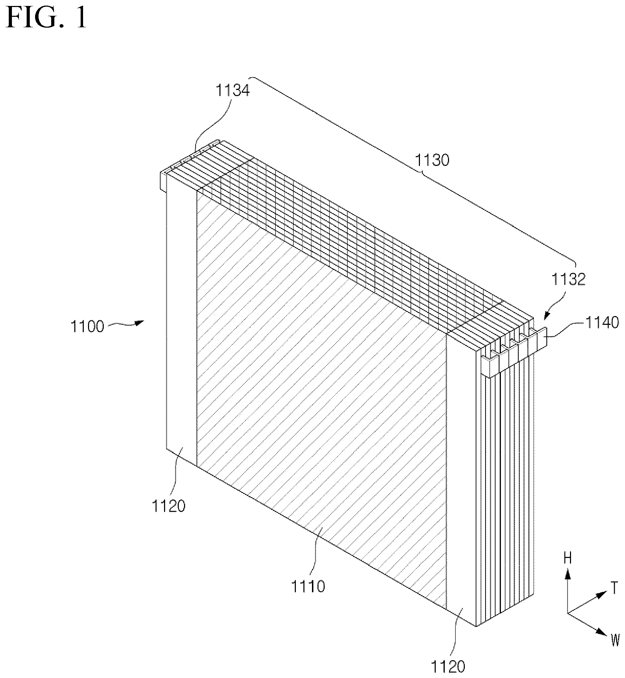

FIG. 1 is a drawing illustrating a stack-type electrode assembly 1100 according to a configuration of the electrode assembly 1000 of the present disclosure.

The stack-type electrode assembly 1100 is a plurality of unit cells stacked in sequence along one direction (thickness direction) with a separator interposed between the positive electrode and negative electrode, with a plurality of positive electrode tabs 1132 and a plurality of negative electrode tabs 1134 formed at each end of the width direction W.

The positive electrode tabs 1132 and negative electrode tabs 1134 are collectively referred to as foil tabs 1130, and are formed by performing a punching process on a non-coated part 1120, which has no active material applied at the positive electrode and negative electrode, respectively. In other words, the illustrated stack-type electrode assembly 1100 has a coated part 1110 to which an active material is applied in the center part, and non-coated parts 1120 are arranged on both sides of the coated part 1110, and accordingly, the positive electrode tabs 1132 and negative electrode tabs 1134, which are punched on the non-coated parts 1120, are of different polarity and separately arranged on both sides of the stack-type electrode assembly 1100.

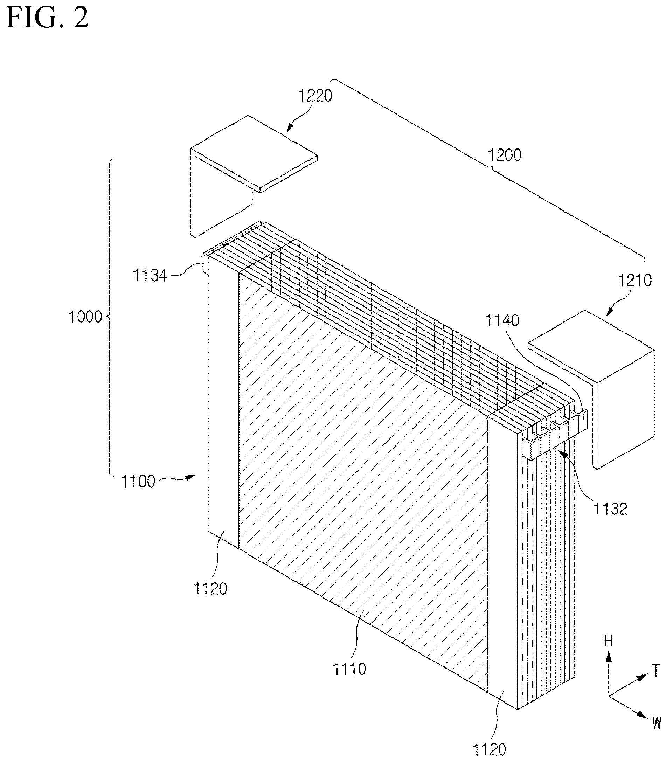

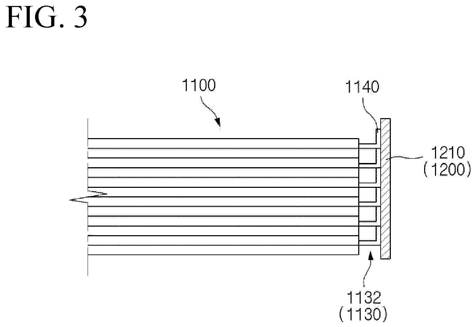

FIG. 2 is a drawing illustrating the structure in which the current collector 1200 is coupled to the stack-type electrode assembly 1100 of FIG. 1, and FIG. 3 is a drawing illustrating a cross-section of the stack-type electrode assembly 1100 coupled to the current collector 1200. Referring to FIG. 2 and FIG. 3, the ends of the positive electrode tabs 1132 and negative electrode tabs 1134 are individually bonded to the positive electrode current collector 1210 and the negative electrode current collector 1220, respectively.

Conventionally, a plurality of foil tabs 1130 (positive electrode tabs and negative electrode tabs) provided on the stack-type electrode assembly 1100 are tack welded to structurally and electrically interconnect and then re-welded to the current collector 1200, thereby requiring that the foil tabs 1130 be sufficiently long as the distance from the stack-type electrode assembly 1100 to the current collector 1200 increases.

In comparison, the electrode assembly 1000 of the present disclosure minimizes the distance from the stack-type electrode assembly 1100 to the current collector 1200 as each of the positive electrode tabs 1132 and negative electrode tabs 1134 are independently welded to the positive electrode current collector 1210 and negative electrode current collector 1220, thereby increasing the substantial capacity based on the same size stack-type electrode assembly 1100 by shortening the length of the foil tabs 1130 in which a non-coated part 1120 without an active material is processed. In addition, since the individual foil tabs 1130 are welded directly to the current collector 1200, a sufficient conduction area can be secured to carry a high current, and thus improved conduction performance, such as an increase in rated current and a decrease in resistance, can be obtained.

Also, referring to FIGS. 1 through 3, the positive electrode tab 1132 and the negative electrode tab 1134 each have a bending portion 1140 at their ends, and the bending portion 1140 of the positive electrode tab 1132 and the negative electrode tab 1134 are individually bonded to the positive electrode current collector 1210 and the negative electrode current collector 1220, respectively. Furthermore, each of the bending portions 1140 of the positive electrode tab 1132 and the negative electrode tab 1134 can be directly bonded to a facing surface of the positive electrode current collector 1210 and the negative electrode current collector 1220, without a separate conducting medium.

As such, by forming the bending portion 1140 at their respective ends, the positive electrode tab 1132 and negative electrode tab 1134 can provide sufficient welding area at the ends of the foil tab 1130, thereby effectively preventing the foil tab 1130 from shorting out from the current collector 1200 due to insufficient welding strength.

And, in the first embodiment of the present disclosure, the positive electrode tabs 1132 and negative electrode tabs 1134 may be formed in a row at the same height relative to the stack-type electrode assembly 1100. Correspondingly, the positive electrode current collector 1210 and the negative electrode current collector 1220 have a width approximately corresponding to the thickness of the stack-type electrode assembly 1100, and the respective bending portions 1140 of the positive electrode tab 1132 and the negative electrode tab 1134 are welded in line to the positive electrode current collector 1210 and the negative electrode current collector 1220, respectively.

### Second embodiment

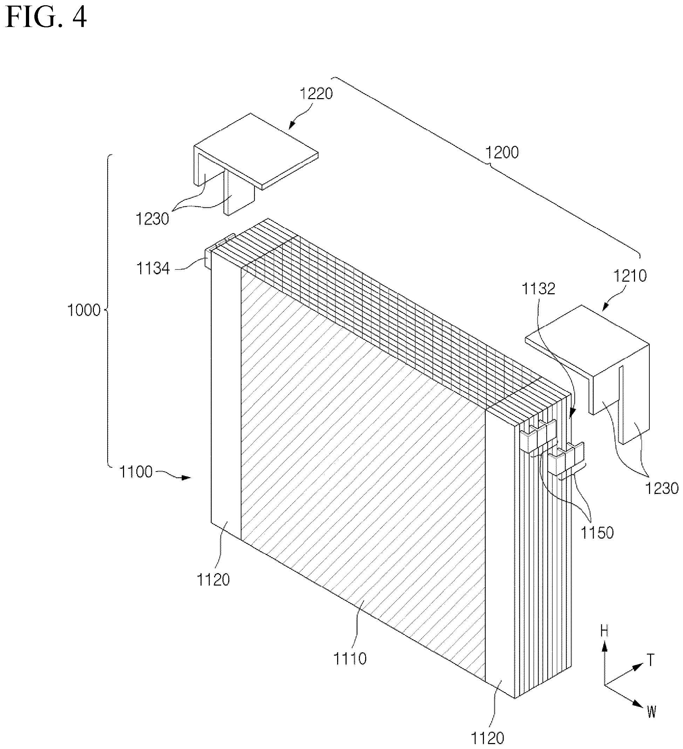

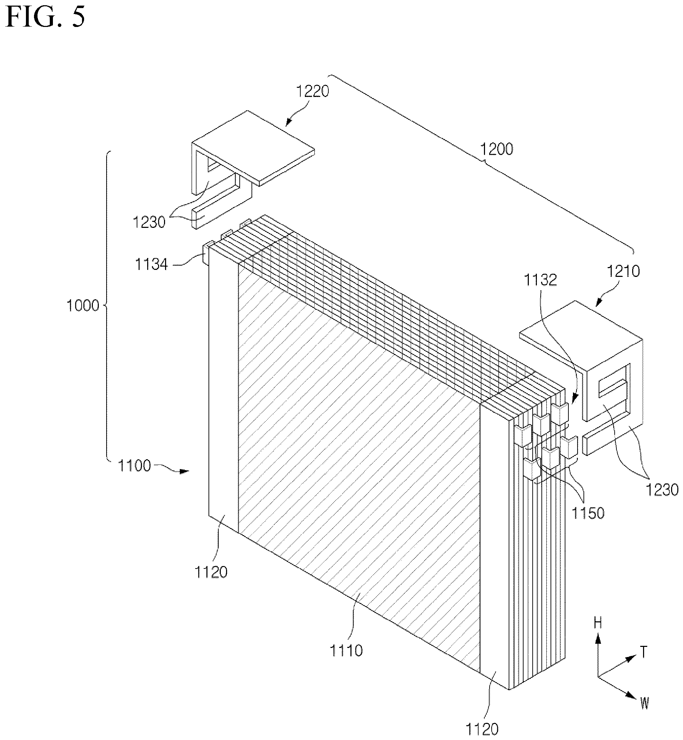

FIGS. 4 and 5 illustrate a stack-type electrode assembly 1100 and a current collector 1200 according to a second embodiment of the present disclosure. The second embodiment of the present disclosure is characterized in that the positive electrode tabs 1132 and negative electrode tabs 1134 form a plurality of tab groups 1150, each formed in a row at different heights relative to the electrode assembly 1100. In other words, in the first embodiment described above, the positive electrode tabs 1132 and negative electrode tabs 1134 form a single tab group 1150 formed in a row at the same height relative to the stack-type electrode assembly 1100, whereas in the second embodiment, the positive electrode tabs 1132 and negative electrode tabs 1134 are divided into several tab groups 1150 of different heights.

In the first embodiment, where both the plurality of positive electrode tabs 1132 and negative electrode tabs 1134 are welded in line with respect to the current collector 1200, the number of foil tabs 1130 that can be welded to the current collector 1200 may be increased if the number of stacked unit cells is increased to increase the thickness of the stack-type electrode assembly 1100. Here, the number of weldable foil tabs 1130 on the current collector 1200 can be understood to include not only the limit of foil tabs 1130 that are physically non-weldable, but also practical difficulties in welding, such as difficulty in welding due to limited welding space, or difficulty in obtaining a uniform welding quality.

The second embodiment of the present disclosure is designed to improve several aspects of welding quality and welding management by dividing the plurality of positive electrode tabs 1132 and negative electrode tabs 1134 into several tab groups 1150. The second embodiment can be broken down into the specific examples of FIG. 4 and 5 in terms of the manner or structure of forming the tab groups 1150. Here, while the illustrated second embodiment exemplifies forming the tab group 1150 into two, it is of course possible to further subdivide the tab group 1150 into three or more.

In the second embodiment shown in FIG. 4, the positive electrode tabs 1132 and negative electrode tabs 1134 of adjacent unit cells each form a single tab group 1150. In other words, a single tab group 1150 is made up of the foil tabs 1130 of the unit cells provided in succession.

Correspondingly, the positive electrode current collector 1210 and negative electrode current collector 1220 can each have a number of branch current collectors 1230 corresponding to the plurality of tab groups 1150. A branch current collector 1230 refers to a partial current collector that is branched off from a single current collector as a stem, with each branch current collector 1230 having a different length corresponding to an up or down arrangement of the tab groups 1150 and arranged side-by-side along the height direction H of the stack-type electrode assembly 1100. The branched branch current collectors 1230 further facilitate welding operations for each tab group 1150.

And, in the second embodiment shown in FIG. 5, the positive electrode tabs 1132 and negative electrode tabs 1134 arranged in a zigzag pattern at different heights with respect to the electrode assembly 1100 form a single tab group 1150 per height. That is, the positive electrode tabs 1132 and negative electrode tabs 1134 of the same height are arranged while skipping a certain number of unit cells to form a single tab group 1150. In FIG. 5, the positive electrode tabs 1132 and negative electrode tabs 1134 are arranged in a zigzag pattern, skipping a single unit cell after another along the stacking direction of the unit cells.

In a single tab group 1150, the distance between the positive electrode tabs 1132 and the negative electrode tabs 1134 may be as wide as the spacing of the skipped unit cells, which is advantageous for maintaining and improving the welding quality by securing more welding space on the current collector 1200 as the distance between the electrode tabs increases.

In addition, the positive electrode current collector 1210 and negative electrode current collector 1220 each have a number of branch current collectors 1230 corresponding to the plurality of tab groups 1150, and in the embodiment of FIG. 5, the branch current collectors 1230 are arranged side-by-side along the thickness direction T of the stack-type electrode assembly 1100 with different heights depending on the height of the corresponding tab group 1150. This is because the width of each tab group 1150 of different heights is approximately equal to the thickness of the stack-type electrode assembly 1100, and it is advantageous from a design perspective to have the branch current collectors 1230 arranged in a form that is bent away from each other.

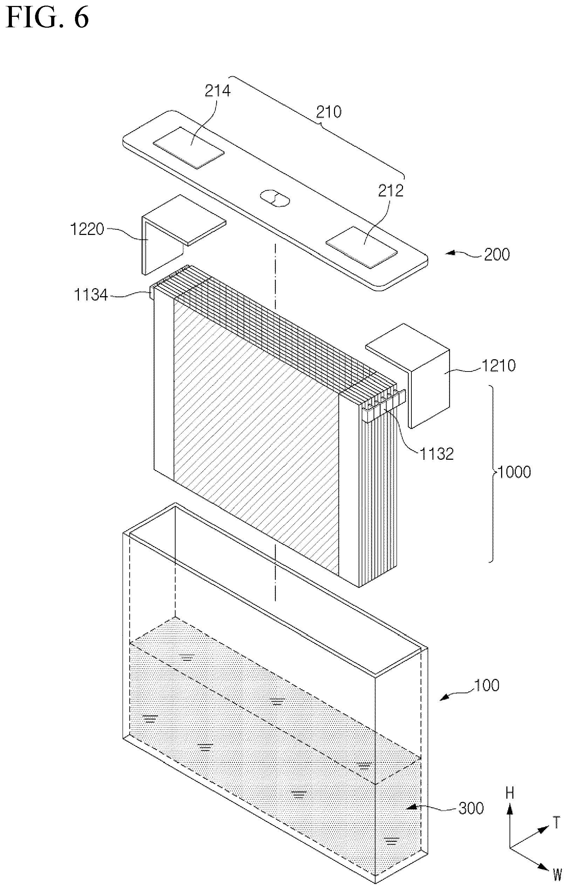

Meanwhile, the present disclosure may provide a prismatic secondary battery 10 including the electrode assembly 1000 according to the first embodiment or the second embodiment, and an example of such a prismatic secondary battery 10 is shown in FIG. 6.

Referring to FIG. 6, the prismatic secondary battery 10 includes a case 100 having at least one surface forming an open surface, and the aforementioned electrode assembly 1000 is stored within the case 100 through the open surface of the case 100. And, a cap plate 200 coupled to the open surface of the case 100 to seal the case 100 has electrode terminals 210 having different polarities, positive electrode terminal 212 and negative electrode terminal 214, wherein positive electrode current collector 1210 and negative electrode current collector 1220 of the electrode assembly 1000 are electrically connected to the positive electrode terminal 212 and negative electrode terminal 214 of the cap plate 200, respectively. The case 100 is then filled with an electrolyte 300, which serves as a medium for ionic conduction between the positive electrode and negative electrode.

Thus, the prismatic secondary battery 10 of FIG. 6 has an electrode assembly 1000 with a substantially increased capacity due to the shortened length of the foil tabs 1130, and is suitable for the recent development trend of larger capacity secondary batteries.

Various principles have been described in more detail above with reference to the drawings and embodiments. However, it is to be understood that the configurations shown in the drawings or embodiments described herein are only particular embodiments and do not represent all of the technical ideas of the disclosure, and that there may be various equivalents and modifications that may replace them at the time of filing the present application.

### [Reference numerals]

10: PRISMATIC SECONDARY BATTERY
100: CASE
200: CAP PLATE
210: ELECTRODE TERMINAL
212: POSITIVE ELECTRODE TERMINAL
214: NEGATIVE ELECTRODE TERMINAL
300: ELECTROLYTE
1000: ELECTRODE ASSEMBLY
1100: STACK-TYPE ELECTRODE ASSEMBLY
1110: COATED PART
1120: NON-COATED PART
1130: FOIL TAB
1132: POSITIVE ELECTRODE TAB
1134: NEGATIVE ELECTRODE TAB
1140: BENDING PORTION
1150: TAB GROUP
1200: CURRENT COLLECTOR
1210: POSITIVE ELECTRODE CURRENT COLLECTOR
1220: NEGATIVE ELECTRODE CURRENT COLLECTOR
1230: BRANCH CURRENT COLLECTOR
W: WIDTH DIRECTION
H: HEIGHT DIRECTION
T: THICKNESS DIRECTION

## Claims

1. An electrode assembly comprising:
a stack-type electrode assembly;
a plurality of positive electrode tabs located at a first end of the stack-type electrode assembly in a width direction; and
a plurality of negative electrode tabs located at a second end of the stack-type electrode assembly in the width direction; and
a positive electrode current collector and a negative electrode current collector electrically connected to the plurality of positive electrode tabs and to the plurality of negative electrode tabs, respectively, wherein:
an end of each of the plurality of positive electrode tabs and an end of each of the plurality of negative electrode tabs are individually bonded to the positive electrode current collector and to the negative electrode current collector, respectively.

2. The electrode assembly of claim 1, wherein:
the end of each of the positive electrode tabs and the end of each of the negative electrode tabs include a bending portion, and
the bending portion of each of the positive electrode tabs and the bending portion of each of the negative electrode tabs are individually bonded to the positive electrode current collector and the negative electrode current collector, respectively.

3. The electrode assembly of claim 2, wherein:
each bending portion of the positive electrode tabs and each bending portion of the negative electrode tabs is directly bonded to a facing surface of the positive electrode current collector and a facing surface of the negative electrode current collector, respectively.

4. The electrode assembly of claim 2, wherein:
the positive electrode tabs are arranged in a row at a substantially equal height with respect to the stack-type electrode assembly; and
the negative electrode tabs are arranged in a row at a substantially equal height with respect to the stack-type electrode assembly.

5. The electrode assembly of claim 2, wherein:
the positive electrode tabs form a plurality of positive tab groups, each positive tab group arranged in a row at a different height with respect to the stack-type electrode assembly; and
the negative electrode tabs form a plurality of negative tab groups, each negative tab group arranged in a row at a different height with respect to the stack-type electrode assembly.

6. The electrode assembly of claim 5, wherein:
the stack-type electrode assembly includes a plurality of unit cells arranged in a thickness direction;
each positive tab group of the plurality of positive tab groups comprises the positive electrode tabs of a plurality of adjacent unit cells of the stack-type electrode assembly; and
each negative tab group of the plurality of negative tab groups comprises the negative electrode tabs of a plurality of adjacent unit cells of the stack-type electrode assembly.

7. The electrode assembly of claim 6, wherein:
the positive electrode current collector includes a plurality of positive branch current collectors, each positive branch current collector corresponding to one of the positive tab groups in the plurality of positive tab groups; and
the negative electrode current collector includes a plurality of negative branch current collectors, each negative branch current collector corresponding to one of the negative tab groups in the plurality of negative tab groups.

8. The electrode assembly of claim 7, wherein:
the plurality of positive branch current collectors are arranged in parallel with respect to the thickness direction of the stack-type electrode assembly, each of the positive branch current collectors extending in a different height according to a height of one of the positive tab groups in the plurality of positive tab groups; and
the plurality of negative branch current collectors are arranged in parallel with respect to the thickness direction of the stack-type electrode assembly, each of the negative branch current collectors extending in a different height according to a height of one of the negative tab groups in the plurality of negative tab groups.

9. The electrode assembly of claim 5, wherein:
each positive tab group of the plurality of positive tab groups comprises at least one non-contiguous pair of positive electrode tabs; and
each negative tab group of the plurality of negative tab groups comprises at least one non-contiguous pair of negative electrode tabs.

10. The electrode assembly of claim 9, wherein:
the positive electrode tabs of adjacent unit cells of the stack-type electrode assembly are arranged in a row at a different height with respect to the stack-type electrode assembly; and
the negative electrode tabs of adjacent unit cells of the stack-type electrode assembly are arranged in a row at a different height with respect to the stack-type electrode assembly.

11. The electrode assembly of claim 9, wherein:
the positive electrode current collector includes a plurality of positive branch current collectors, each positive branch current collector corresponding to one of the positive tab groups in the plurality of positive tab groups; and
the negative electrode current collector includes a plurality of negative branch current collectors, each negative branch current collector corresponding to one of the negative tab groups in the plurality of negative tab groups.

12. The electrode assembly of claim 11, wherein:
each of the plurality of positive branch current collectors includes a first portion extending in the thickness direction of the stack-type electrode assembly, wherein the first portions of each of the plurality of positive branch current collectors are arranged in parallel with respect to a height direction of the stack-type electrode assembly;
each of the plurality of positive branch current collectors includes a second portion extending in the height direction of the stack-type electrode assembly according to a height of one of the positive tab groups in the plurality of plurality of positive tab groups;
each of the plurality of negative branch current collectors includes a first portion extending in the thickness direction of the stack-type electrode assembly, wherein the first portions of each of the plurality of negative branch current collectors are arranged in parallel with respect to the height direction of the stack-type electrode assembly; and
each of the plurality of negative branch current collectors includes a second portion extending in the height direction of the stack-type electrode assembly according to a height of one of the negative tab groups in the plurality of plurality of negative tab groups.

13. A prismatic secondary battery comprising:
a case;
an electrode assembly according to claim 1 stored inside the case;
a cap plate coupled to the case, the cap plate including a positive terminal and a negative terminal, wherein the positive terminal and the negative terminal are electrically connected to the positive electrode current collector and the negative electrode current collector of the electrode assembly, respectively; and
an electrolyte inside the case.
